# EUROPÄISCHE PATENTANMELDUNG

(11) **EP 1 227 570 A2**
(43) Veröffentlichungstag der Anmeldung: **31.07.2002**
(21) Anmeldenummer: 02001678.8
(22) Anmeldetag: 24.01.2002
(51) Int. Cl.: H02M 3/158

(54) **Elektrofahrzeugantrieb mit einem Drosselwandler im Antriebstrang**

(30) Priorität: 27.01.2001 DE 10103633
(71) Anmelder: SMA Regelsysteme GmbH, 34266 Niestetal (DE)
(72) Erfinder: Falk, Andreas, 34131 Kassel (DE)
(74) Vertreter: WALTHER, WALTHER & HINZ Patentanwälte

(57) **Zusammenfassung**

Bei einem Elektrofahrzeugantrieb mit einer Drosselwandlerschaltung im Antriebsstrang wird zur Erhöhung des Wirkungsgrades und zur gleichzeitigen Verringerung des Eigengewichts vorgeschlagen, mindestens zwei zeitlich versetzt getaktete Teilschaltungen (T1 - Tn, H1 - Hn, I1 - In, HT1 - HTn), die jeweils wenigstens einen steuerbaren Leistungsschalter und eine Speicherdrossel aufweisen, vorzusehen, wobei jede Teilschaltung so betrieben wird, dass im gesamten Betriebsbereich der Strom in den Drosseln (L1 - Ln) lückt.

## Beschreibung

Die Erfindung betrifft Elektrofahrzeugantriebe mit einer im Antriebsstrang angeordneten elektronischen Drosselwandlerschaltung zur Spannungsanpassung.

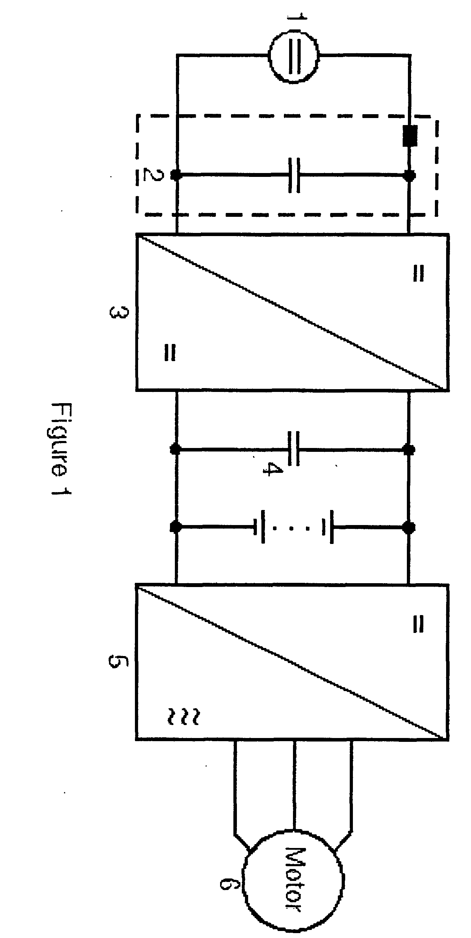

Einen typischen Antriebsstrang eines Elektrofahrzeuges bestehend aus einer Gleichspannungsquelle, einem Eingangsfilter, einer Drosselwandlerschaltung, einem Glättungskondensator, einem Motorumrichter und einem Elektromotor zeigt die Fig. 1. Die Drosselwandlerschaltung dient dabei zur Spannungsanpassung zwischen einer Eingangs-Gleichspannung und einer Ausgangs-Gleichspannung.

Zu einer solchen Spannungsanpassung werden vielfach Drosselwandler als unidirektionale Wandler eingesetzt. Aus dem Buch "Halbleiter-Schaltungstechnik" von U. Tietze und Ch. Schenck, Springer-Verlag, 9. Aufl. 1989, Kap. 18.6, S. 539- 548 sind unterschiedliche unidirektionale Wandler der hier betroffenen Art bekannt, nämlich ein Abwärts-Wandler (im Folgenden "Tiefsetzsteller"), ein Aufwärts-Wandler (im Folgenden "Hochsetzsteller") und ein Invertierender Wandler (im Folgenden "Inverswandler"). In den hier aufgeführten Wandlern ist jeweils mindestens eine Freilaufdiode vorgesehen. Die Freilaufdiode kann auch durch einen steuerbaren Leistungshalbleiter ersetzt werden. Ein solcher Gleichstromsteller ist beispielsweise aus der WO 00/16469 vorbekannt.

Des Weiteren bekannt sind bidirektionale Wandler wie beispielsweise "Hochtiefsetzsteller".

Bei Drosselwandlern überdies bekannt ist der Betriebsmodus des sogenannten "lückenden Betriebs" oder "Lückbetriebs". Dieser Betriebszustand, beim dem der Drosselstrom anstatt kontinuierlich zu fließen "lückt", d.h. zyklisch unterbrochen ist, tritt dann auf, wenn der Ausgangsstrom kleiner als der halbe mittlere Laststromripple ist.

Nachteilig am Lückbetrieb in der Nähe des Nennbetriebes ist, dass große Kondensatorströme fließen, dass ein großer Wechselstrom in der Drossel fließt, was große ohnmsche Verluste bedeutet, und dass der Spitzenstrom in der Drossel wesentlich größer ist als der mittlere Strom.

Sämtlichen bekannten Elektrofahrzeugen mit Drosselwandler im Antriebsstang ist nun gemein, dass im Nennbetriebspunkt der Drosselstrom nicht lückt und alle Halbleiter daher verlustbehaftet ein- und ausgeschaltet werden. Insbesondere wird der maximale Rippelstrom in der jeweiligen Drossel so gewählt, dass die für große Leistungen verfügbaren Kernmaterialien eingesetzt werden können. Die noch verbleibenden Verluste werden z. B. mit Wasserkühlung abgeführt. In Fahrzeugen gelten häufig besondere Normen und Vorschriften zur Störstromemission, die aus signaltechnischen Anforderungen oder aus Forderungen zur Unterdrückung von eventuellen Betterierippelströmen resultieren. Zum Einhalten dieser Vorschriften werden Filter 2. Ordnung mit niedriger Grenzfrequenz z. B. von ca 20 Hz eingesetzt. Zum Schalten der größeren Leistungen im Antriebsstrang werden heute hauptsächlich IGBT's eingesetzt. Diese IGBT's verursachen beim Einschalten und Ausschalten sogenannte Schaltverluste. Die oben beschriebenen Fahrzeugantriebe weisen insbesondere den Nachteil hoher Gewichte der eingesetzten Drosseln und großer Schaltverluste der Halbleiterschalter auf.

Der vorliegenden Erfindung liegt daher die Aufgabe zugrunde, einen Elektrofahrzeugantrieb unter Vermeidung der Nachteile bekannter Fahrzeugantriebe anzugeben.

Diese Aufgabe wird gelöst durch die Merkmale des unabhängigen Anspruchs 1. Vorteilhafte Weiterbildungen sind Gegenstand der Unteransprüche.

Der Erfindung liegt der Gedanke zugrunde, die jeweilige Drosselwandlerschaltung großer Leistung bis zum Nennbetriebspunkt im Lückbetrieb zu betreiben und die genannten Nachteile des Lückbetriebs, insbesondere die hohen Stromspitzen und großen Kondensatorströme, dadurch auszugleichen, dass die gesamte Schaltung in n versetzt getaktete Teilschaltungen aufgeteilt wird, die vorzugsweise mit variabler Frequenz betrieben werden. Hierbei können die Ansteuerimpulse der einzelnen Teilschaltungen um jeweils 1/n der Periodendauer T versetzt zueinander liegen, wobei n die Anzahl der genannten Teilschaltungen repräsentiert.

Bedingt durch den Lückbetrieb treten keine Einschaltverluste in den Halbleiterschaltern S1 bis Sn und keine Abschaltverluste der Dioden D1 bis Dn auf. Zudem werden die noch größeren Ausschaltverluste in den Halbleiterschaltern S1 bis Sn mehr als kompensiert, da insbesondere bei Halbleitern mit hoher Sperrspannung die Einschalt- und Diodenschaltverluste überwiegen.

Auch das Funkentstörverhalten der gesamten Drosselwandlerschaltung wird gegenüber dem Stand der Technik verbessert, da Funkstörungen hauptsächlich durch das Abkommutieren leitender Dioden verursacht werden.

Zudem ist aufgrund der versetzten Taktung der einzelnen Teilschaltungen die Ripplefrequenz der Kondensatorspannungen n-mal größer als die Schaltfrequenz. Bedingt durch die versetzte Taktung sinkt der Kondensatorstrom auf mindestens 1/n des Stromes ohne versetzte Taktung. Es ist zu erwähnen, dass bei überlappenden Strömen der Kondensatorstrom sogar noch kleiner werden kann. Wegen der verringerten Kondensatorströme lassen sich auch die Kondensatornennleistungen verringern und werden kleiner den Werten bei konventionellen Schaltungen.

Es ist weiter vorteilhaft, die Schaltfrequenz an die Differenzspannung von Ua und Ue so anzupassen, dass die Schaltung einerseits sicher im Lückbetrieb verbleibt und andererseits keine zu hohen Stromspitzen auftreten.

Die vorgenannten Nachteile des Lückbetriebs werden bei der erfindungsgemäßen Drosselwandlerschaltung demnach durch die genannte versetzte Taktung mittels der Parallelschaltung der verwendeten Halbleiterbauelemente ausgeglichen. D.h. je höher die Anzahl der versetzten Taktungen ist, umso geringer sind die Kondensatorströme.

Zusätzlich ist hierbei die Frequenz der Kondensatorrippelspannung n mal höher als die Grundfrequenz eines einzelnen der vielen parallel geschalteten Teilschaltungen.

Ein besonderer Vorteil des Lückbetriebs besteht darin, dass die Drosseln als Luftdrosseln, bevorzugt toroidförmig gewickelt, ausgebildet sein können. Diese Drosseltypen benötigen keinen Eisenkern, was zu einer Gewichtsersparnis führt. Zudem treten wegen des fehlenden Eisenkerns keine Kernverluste auf. Da im Lückbetrieb ein sehr großer Wechselstromanteil in die Drossel fließt, ist der Anteil der Kernverluste an den Gesamtdrosselverlusten sehr groß und werden in der Luftdrossel vollständig vermieden. Durch die Toroidform werden große magnetische Wechselfelder im Außenraum der Drossel vermieden. Die Vorteile der genannten Drosselbauweise lassen sich dadurch besonders gut nutzen, dass gegenüber dem Stand der Technik nur vergleichsweise geringe Induktivitätswerte benötigt werden. Es versteht sich allerdings, dass auch herkömmliche Drosseln mit Kernen verwendet werden können.

Die toroidförmigen Luftdrosseln können mit Kunstharz oder dergleichen so vergossen werden, dass ein kompaktes und relativ leichtes Bauteil entsteht. Dieser Kunststoffblock kann dabei rohrförmige Kanäle zur Wasserkühlung enthalten. Damit erhält man ein leichtes Bauteil, welches gut mit Wasser oder einem anderen Kühlmedium kühlbar ist und vorteilhaft in Fahrzeugen mit elektrischem oder Hybridantrieb eingesetzt werden kann.

Aufgrund der hochfrequenten Rippelströme kann der Eingangsfilter gegenüber dem Stand der Technik verkleinert werden. Bei Einsatz eines zweipoligen Filters im Eingang und einer hochdynamischen Regelung kann die angegebene Schaltung nur eingesetzt werden, wenn die quadratisch mit der Leistung ansteigende Streckenverstärkung entsprechend kompensiert wird.

In diesem Fall kann auch auf eine Summenstromregelung zurückgegriffen werden, bei der nur der Summenstrom der n Drosselströme gemessen wird und damit eine preiswerte Messwerterfassung realisiert wird.

Um den Hoch-Tiefsteller zu realisieren, können vorteilhaft Halbbrückenmodule oder Drehstrombrückenmodule mit jeweils zwei I6BTs und zwei Inversdioden bzw. sechs I6BTs und sechs Inversdioden eingesetzt werden.

Der erfindungsgemäße Drosselwandler ist aus den genannten Gründen vorteilhaft in Elektrofahrzeugantrieben einsetzbar und arbeitet dabei äußerst verlustarm. Er kombiniert die Vorteile eines hohen Wirkungsgrades und eines geringen Eigengewichts.

Die Erfindung wird nachfolgend anhand von in den Zeichnungen dargestellten Ausführungsbeispielen eingehender erläutert. Dabei zeigen im Einzelnen:
- Fig. 1: einen Antriebsstrang eines Elektrofahrzeuges;
- Fig. 2: ein bevorzugtes Ausführungsbeispiel eines erfindungsgemäßen Tiefsetzstellers;
- Fig. 3: ein bevorzugtes Ausführungsbeispiel eines erfindungsgemäßen Hochsetzstellers;
- Fig. 4: ein bevorzugtes Ausführungsbeispiel eines erfindungsgemäßen Inverswandlers;
- Fig. 5: ein bevorzugtes Ausführungsbeispiel eines erfindungsgemäßenbidirektionalen Hochtiefsetzstellers;
- Fig. 6: typische Drosselströme in einem Tiefsetzsteller gemäß Fig. 2 im Betriebszustand Ue - Ua groß und hohe Schaltfrequenz; und
- Fig. 7: typische Drosselströme in einem Tiefsetzsteller gemäß Fig. 1 im Betriebszustand Ue - Ua klein und niedrige Schaltfrequenz.

Fig. 1 zeigt einen im Stand der Technik bekannten Antriebsstrang eines Elektrofahrzeuges. Der Antriebsstrang umfasst eine Gleichspannungsquelle 1, einen Eingangsfilter 2, eine Drosselwandlerschaltung 3, einen DC-Bus 4, einen Motorumrichter 5 sowie einen elektrisch betriebenen Fahrmotor 6. Die Drosselwandlerschaltung 3 dient dabei zur Spannungsanpassung zwischen der Gleichspannungsquelle 1 und der DC-Bus-Spannung.

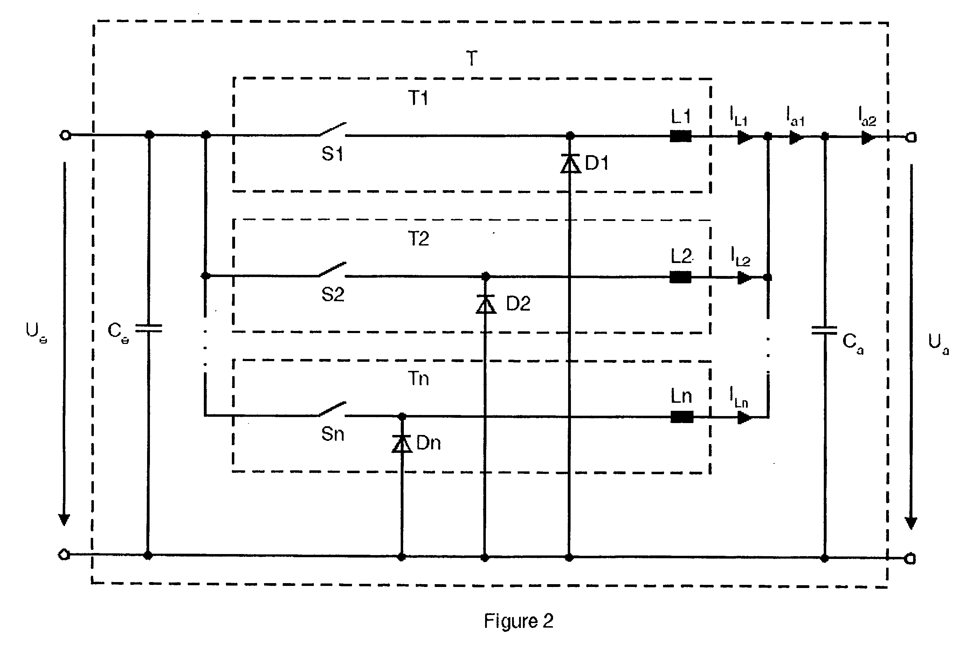

Ein erstes bevorzugtes Ausführungsbeispiel einer Schaltung zur entsprechenden Spannungsanpassung in einem Antriebsstrang eines Elektromotors ist in der Fig. 2 gezeigt. Hierbei erfolgt die Spannungsanpassung zwischen einer Eingangsspannung Uc und einer Ausgangsspannung Ua mittels eines Tiefsetzstellers T. Parallel zur Eingangsspannung ist ein erster Glättungskondensator Ce und parallel zur Ausgangsspannung Ua ein entsprechender Glättungskondensator Ca angeordnet. Der obere Längszweig teilt sich in dem Beispiel in n = 3 Parallelzweige auf, welche - wie durch die gestrichelte Linie angedeutet - auch jede beliebige Zahl zwischen 2 und n sein können. Die Parallelzweige enthalten drei durch gestrichelte Linien gegeneinander abgegrenzte Teilschaltungen. Jede der drei Teilschaltungen weist einen als Halbleiterschalter S1 - Sn ausgelegten Leistungsschalter auf. Die Halbleiterschalter S1 - Sn können beispielsweise als Integrated Gate Bipolar Transistor (IGBT), Metal-Oxide-Semiconductor Field Effect Transistor (Mosfet), Gate Turnoff Thyristor (GTO), MOS (Metal-Oxide-Semiconductor) Gated GTO (MTO), Integrated Gate Commutated Thyristor (IGCT) oder zwangskommutierter Thyristor ausgeführt sein.

Die Längszweige der einzelnen Teilschaltungen weisen ferner Drosseln L1 - Ln auf, durch die im Betriebsfall jeweils Ströme IL1 - ILn fließen. Ferner zweigen von den Längszweigen jeweils Querzweige ab, in denen Dioden D1 - Dn angeordnet sind.

In dem Hauptlängszweig, hinter der parallelen Anordnung der einzelnen Längszweige der Teilschaltungen, fließt der Gesamtstrom la1. Abzüglich des in den Glättungskondensator Ca hineinfließenden Stroms fließt am Ausgang der Schaltung der Strom la2.

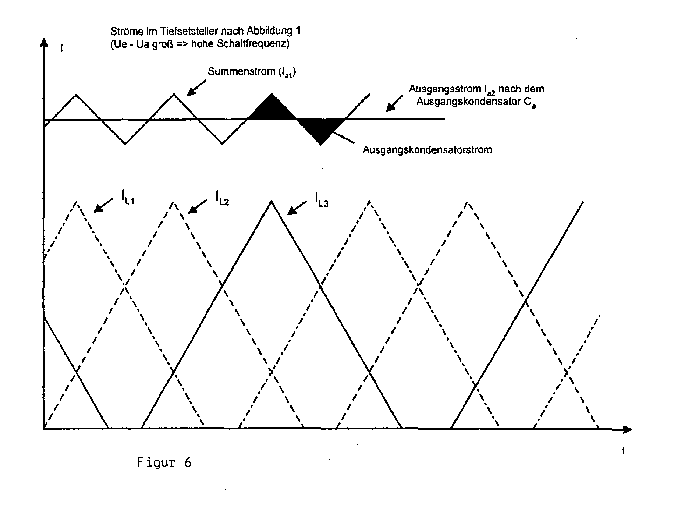

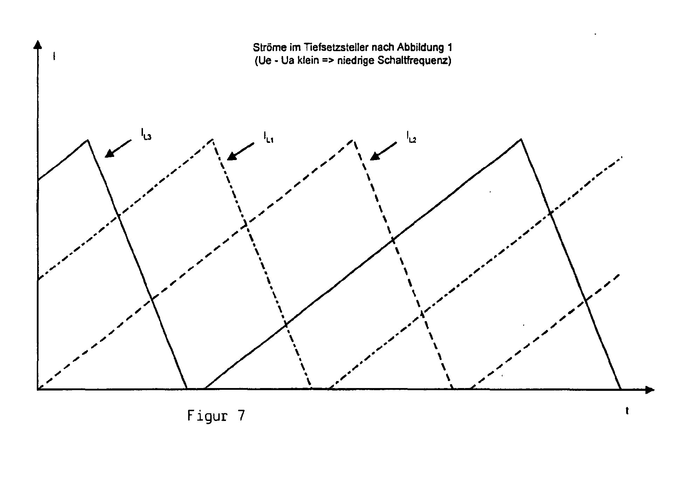

Bei einer Schaltung mit n = 3 werden die Halbleiterschalter S1 - S3 zeitlich versetzt getaktet, und zwar in dem Beispiel mit 1/3 der Gesamtperiodendauer, d.h. um jeweils 120°, gegeneinander verschoben. Die sich ergebenden Gesamtströme werden nachfolgend noch anhand der Figuren 6 und 7 im Detail erläutert.

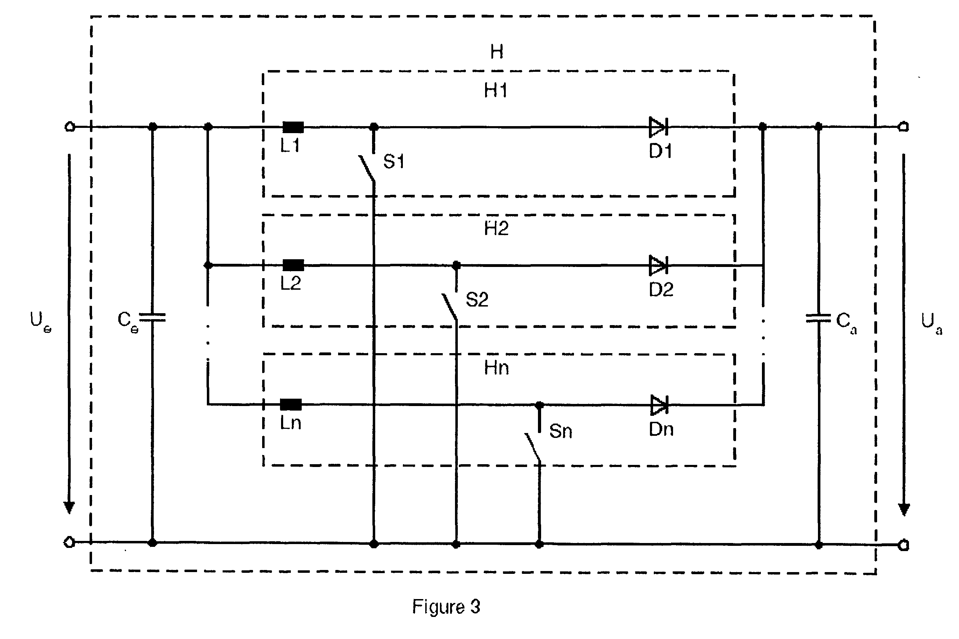

Der in der Fig. 3 gezeigte Hochsetzsteller H ähnelt prinzipiell der in Fig. 2 gezeigten Schaltung und unterscheidet sich von dieser nur dadurch, dass hier die jeweiligen Längszweige Drosseln L1 - Ln und Dioden D1 - Dn aufweisen, wohingegen Schalter S1 - Sn in jeweiligen Querzweigen angeordnet sind.

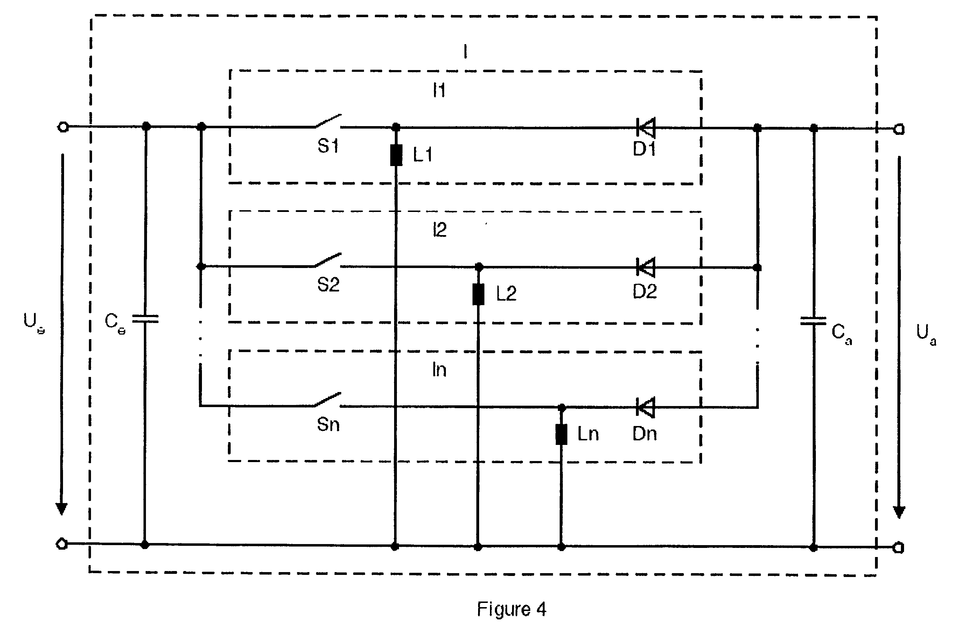

Bei dem in der Fig. 4 gezeigten Inverswandler I sind die Schalter S1 - Sn entsprechend der Fig. 1 in den jeweiligen Längszweigen angeordnet. Im Unterschied zu Fig. 1 sind die jeweiligen Drosseln L1 - Ln in Querzweigen angeordnet und die Dioden D1 - Dn in den jeweiligen Längszweigen.

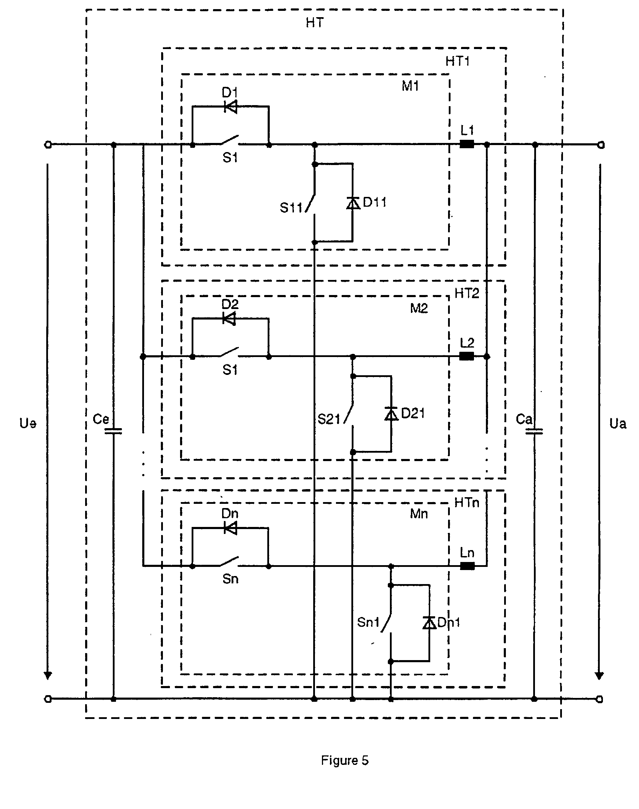

Der in der Fig. 5 gezeigte bidirektionale, kombinierte Hochtiefsetzsteller Fig. 4 weist ebenfalls drei Teilschaltungen HT1 - HTn auf. Jede der Teilschaltungen weist neben einer im jeweiligen Längszweig angeordneten Drossel L1 - Ln eine erste im jeweiligen Längszweig angeordnete Baugruppe von zueinander parallel geschalteten Schaltern S1 - Sn und Dioden D1 - Dn sowie zweite in jeweiligen Querzweigen angeordnete Baugruppen von ebenfalls zueinander parallel geschalteten Schaltern S11 - Sn1 und Dioden D11 - Dn1 auf.

Der Strom fließt in der Funktion als Tiefsetzsteller in der gezeigten Darstellung von links nach rechts und in der Funktion als Hochsetzsteller von rechts nach links. Die Halbleiter einer Teilschaltung HT1 bis HTn können jeweils in einem Halbleiterbrückenmodul M1 bis Mn angeordnet sein.

Im unteren Teil der Fig. 6 ist ein typischer dreieckförmiger Verlauf der einzelnen Last- bzw. Drosselströme IL1 - IL3 bei n = 3 dargestellt. Dieser Verlauf rührt daher, dass beim Einschalten bzw. Aktivieren der jeweiligen Schalter S1 - S3 der Strom in den jeweiligen Drosseln L1 - L3 bei Anlegen einer konstanten Spannung U etwa linear ansteigt. Durch diesen Strom werden die Drosseln L1 - L3 'aufgeladen', d.h. der Strom wird in diesen Drosseln magnetisch zwischengespeichert. Wird dann der jeweilige Schalter S1 - S3 bereits nach kurzer Zeit wieder geöffnet, werden die jeweiligen Dioden D1 - D3 aktiv und bewirken ein näherungsweise lineares Abfließen des in den Drosseln L1 - L3 zwischengespeicherten Stroms in entsprechender Rückrichtung. Die einzelnen Kurven sind aufgrund der zeitversetzten Ansteuerung der einzelnen Schalter S1 - S3 jeweils gegeinander um 120° phasenverschoben, so dass sich die Kurven nach Ablauf der Periode T zyklisch wiederholen. Die Wertspanne der zwischen den Dreieckspitzen auftretenden Spitzen-Spitzen-Ströme und der sich ergebende mittlere Laststrom la1 sind als durchgezogene Linien angedeutet.

Die am Ausgang der Teilschaltungen sich ergebenden Gesamtströme sind nun im oberen Teil der Fig. 6 dargestellt. Der Summenstrom la1 weist eine "Restwelligkeit" entsprechend dem dreieckförmigen Verlauf der Einzelströme auf. Diese wird durch den Kondensator Ca geglättet, so dass sich nach dem Ausgangskondensator Ca insgesamt der nahezu konstante Strom la2 ergibt.

Die halbe Wertspanne zwischen den Dreieckspitzen entspricht dabei der Amplitude des Ausgangskondensatorstroms.

Es ist anzumerken, dass der Summenstrom la1 bei einer Schaltung, bei der zwei der drei Dreieckkurven entfielen, zeitweise aussetzen d.h. lücken würde. Dies wäre demnach dann der Fall, wenn der durch die durchgezogene Linie angedeutete mittlere Laststrom la2 kleiner als der halbe Wert des durch die obere durchgezogene Linie angedeuteten Spitzen-Stroms wäre. Erst aufgrund der erfindungsgemäß vorgeschlagenen mehreren Teilschaltungen und deren zeitversetzter Ansteuerung mittels der Schalter S1 - S3 wird erreicht, dass der Wert des Summenstroms la1 bei Nennleistung nicht unter den Wert Null fällt.

Es ist hier ferner anzumerken, dass sich der sogenannte "Lückbetrieb" meist nur dann einstellt, wenn bei einer Schaltung nach dem Stand der Technik die Leistung des Gerätes klein gegenüber der Nennleistung ist. Soll eine oben beschriebene Drosselwandlerschaltung allerdings auch bei großer Leistung im Lückbetrieb betrieben werden, muss die Drossel klein sein.

Das in der Fig. 7 gezeigte Stromdiagramm illustriert den Fall, dass die Differenz Ue - Ua klein ist und eine relativ niedrige Schaltfrequenz fs vorliegt. Die gezeigte Asymmetrie der Dreieckskurven rührt daher, dass der Stromanstieg von einer kleinen Differenzspannung Ue - Ua verursacht wird, die Spannung Ua aber den gleichen Wert wie unter Bild 6 hat. Der Stromabbau erfolgt genauso schnell.

Die Schaltung wird bevorzugt in Fahrzeugen mit elektrischem Antrieb eingesetzt, und zwar insbesondere bei solchen Fahrzeugen, die einerseits batteriebetrieben sind und die andererseits zur Erzielung hoher Beschleunigungswerte Kondensatoren benötigen, um die jeweilige Spitzenlast abzudecken bzw. die Bremsenergie aufzunehmen.

Die Batterien stellen im Wesentlichen eine konstante Spannung bereit und arbeiten z. B. bei etwa 350 Volt; die Kondensatoren hingegen liefern eine variable Spannung im Bereich von z. B. 100 - 200 Volt. Die Spannungsanpassung erfolgt durch den beschriebenen Elektrofahrzeugantrieb mit der Drosselwandlerschaltung, die im beschriebenen Lückbetrieb mit versetzter Taktung betrieben wird.

Es versteht sich, dass die in den Figuren 2 - 5 beschriebenen Schaltungen zum Zwecke der Erhöhung der Leistung beliebig parallel geschaltet und so zu größeren Einheiten zusammengefasst werden können.

## Patentansprüche

1. Elektrischer Fahrzeugantrieb mit einer elektronischen Drosselwandlerschaltung im Antriebsstrang zur Umsetzung einer Eingangs-Gleichspannung (Ue) in eine Ausgangs-Gleichspannung (Ua), oder umgekehrt, aufweisend mindestens einen steuerbaren Leistungsschalter, mindestens eine Speicherdrossel, sowie mindestens einen parallel zur Ausgangs-Gleichspannung angeordneten Glättungskondensator,
**gekennzeichnet durch**
mindestens zwei zeitlich versetzt getaktete Teilschaltungen der Art T1 - Tn oder H1 - Hn oder I1 - In oder HT1 - HTn, die jeweils wenigstens einen steuerbaren Leistungsschalter und eine Speicherdrossel aufweisen, wobei jede Teilschaltung so betrieben wird, dass im Wesentlichen im gesamten Betriebsbereich der Strom in den Drosseln (L1 - Ln) lückt.

2. Elektrischer Fahrzeugantrieb nach Anspruch 1,
**dadurch gekennzeichnet,**
**dass** die mindestens zwei Teilschaltungen jeweils mindestens einen Freilauf z. B. eine Freilaufdiode aufweisen.

3. Elektrischer Fahrzeugantrieb nach Anspruch 1 oder 2,
**dadurch gekennzeichnet,**
**dass** die Ansteuerung der Teilschaltungen um jeweils 1/n der Gesamtperiodendauer (T) versetzt zueinander erfolgt.

4. Elektrischer Fahrzeugantrieb nach einem der Ansprüche 1 bis 3,
**dadurch gekennzeichnet,**
**dass** die Schaltfrequenz während des Betriebs so variiert wird, dass die Teilschaltungen bei unterschiedlicher Spannungsdifferenz zwischen der Eingangs- und der Ausgangs-Gleichspannung einerseits sicher im Lückbetrieb verbleiben, andererseits zu hohe Stromspitzen in den Speicherdrosseln (L1 - Ln) vermieden werden.

5. Elektrischer Fahrzeugantrieb nach einem der vorhergehenden Ansprüche, **dadurch gekennzeichnet,**
**dass** die Speicherdrosseln (L1 - Ln) als toroidförmige Luftdrosseln ausgeführt sind.

6. Elektrischer Fahrzeugantrieb nach einem der vorhergehenden Ansprüche, **dadurch gekennzeichnet,**
**dass** die Speicherdrosseln (L1 - Ln) in einen Kunststoffblock, insbesondere einen Kunstharzblock, eingebettet sind.

7. Elektrischer Fahrzeugantrieb nach einem der voranstehenden Ansprüche, **dadurch gekennzeichnet,**
**dass** der Kunststoffblock insbesondere rohrförmige Kanäle zur Wasserkühlung aufweist.

8. Elektrischer Fahrzeugantrieb nach einem der voranstehenden Ansprüche, **dadurch gekennzeichnet,**
**dass** die Messwerterfassung für den zu regelnden Strom nur einmal erfasst wird, so dass der Summenstrom den Drosseln L1 - Ln zur Messwerterfassung für die Regelung genutzt wird, so dass nur eine Messwerterfassung gebraucht wird.

9. Elektrischer Fahrzeugantrieb nach Anspruch 8,
**dadurch gekennzeichnet,**
**dass** die Regelung des Summenstomes derart ausgebildet ist, dass eine Linearisierung der Streckenverstärkung durch die Quadratwurzelbildung der Regelabweichung erreicht wird, damit die Schaltung auch bei großen Leistungen stabil arbeitet.

10. Elektrischer Fahrzeugantrieb nach nach einem der vorangehenden Ansprüche,
**gekennzeichnet durch**
einen mittels Halbbrückenmodulen oder Drehstrombrückenmodulen M1 bis Mn realisierten Hoch- oder Tiefsetzsteller.

11. Elektrischer Fahrzeugantrieb nach Anspruch 1,
**dadurch gekennzeichnet,**
**dass** die Halbbrückenmodule bzw. Drehstrombrückenmodule jeweils zwei IGBTs und zwei Inversdioden oder jeweils sechs IGBTs und sechs Inversdioden aufweisen.
